(19) **Europäisches Patentamt / European Patent Office / Office européen des brevets**

(11) **EP 4 564 315 B1**

(12) **EUROPEAN PATENT SPECIFICATION**

(45) Date of publication and mention
of the grant of the patent:
**29.07.2026 Bulletin 2026/31**

(21) Application number: **23213120.1**

(22) Date of filing: **29.11.2023**

(51) International Patent Classification (IPC):
***G06V 20/56*** *(2022.01)*

(52) Cooperative Patent Classification (CPC):
**G06V 20/588**

(54) **LIDAR BASED ROAD CONDITION ESTIMATION FOR PASSENGER VEHICLES**

LIDARBASIERTE STRASSENZUSTANDSSCHÄTZUNG FÜR PASSAGIERFAHRZEUGE

ESTIMATION DE L'ÉTAT DE LA ROUTE BASÉE SUR UN LIDAR POUR VÉHICULES DE TOURISME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.06.2025 Bulletin 2025/23**

(73) Proprietor: **Volvo Car Corporation
405 31 Göteborg (SE)**

(72) Inventors:
• **Vijayan, Arun Shenbaga Priyan
421 46 Västra Frölunda (SE)**
• **Yang, Derong
436 38 Askim (SE)**

(74) Representative: **Nederlandsch Octrooibureau
P.O. Box 29720
2502 LS The Hague (NL)**

(56) References cited:
**US-A1- 2011 060 478     US-A1- 2022 324 421**

## Description

### Technical Field

The current disclosure relates to a method for enabling estimation of a condition of a road. The disclosure relates further to a vehicle system configured to perform said and to a vehicle comprising such a vehicle system.

### Background Art

It is well known to provide road conditions such as inclination, altitude and banking angles using map service providers or on-board vehicle state estimation algorithms that use vehicle motion sensors such as Inertial Measurement Unit (IMU) and wheel speed sensors. However, these kind of sensors introduce delays and offsets in the estimation of the road condition and cannot provide information about a condition of the upcoming parts of the road in the forward driving direction. Furthermore, when using map service providers, the availability and accuracy of the road condition depends on the resolution and the features included in the map.

Road damages and anomaly detection have been recently investigated using camera images. However, its accuracy is limited, especially in low visibility situations. Suspension signals like vehicle ride height, and vertical accelerations can also be used to estimate the condition of the part of the road wherein the vehicle is located at the moment of measurement, but cannot be used to estimate the condition of the road ahead of the vehicle.

It is also known to use image processing algorithms to estimate future conditions of the road. But these kind of systems use complex deep learning algorithms which are relatively computationally expensive. US 2011/060478 A1 discloses a vehicle-mounted sensing system for detecting and modelling road surface characteristics using onboard sensors in order to determine road profile and surface conditions. The system processes sensor data to estimate road geometry for vehicle control and safety applications. US 2022/324421 A1 discloses processing LiDAR-based point cloud data in a vehicle environment, including segmentation and modelling of road surfaces for advanced driver assistance or autonomous driving functions. The document focuses on spatial analysis of 3D sensor data to characterize roadway features.

### Summary

The invention is defined by the appended claims. The disclosure relates to a method performed by a vehicle system for enabling estimation of a condition of a road, the method comprising obtaining, from a sensor mounted on a vehicle, first data comprising a first plurality of data points, wherein each of the first plurality of data points comprises longitudinal, lateral and vertical coordinates representing respective dimensions of a part of the road at a first time, obtaining a second plurality of data points, wherein each of the second plurality of data points comprises longitudinal, lateral and vertical coordinates representing respective dimensions of the part of the road at a second time, wherein the first time is more recent than the second time, segmenting the first plurality of data points into a plurality of segmented data areas based on the longitudinal and lateral coordinates of the first plurality of data points, and estimating a respective vertical position in each segmented data area based on the vertical coordinates of the second plurality of data points and a motion state of the vehicle at the second time. In this way, the condition of the road at a first time can be efficiently estimated with accuracy by combining motion state and longitudinal, lateral and vertical coordinates representing respective dimensions of a part of the road at a second time, wherein the first time is more recent than the second time. Through the disclosure, a current time instant will be referred as a first time while a previous time instant will be referred as a second time.

The sensor mounted in the vehicle may be a three-dimensional (3D) sensor. The sensor may be mounted in a front part of the vehicle such that is arranged to detect a part of the road that is ahead of the vehicle. The sensor may be mounted in any other suitable part of the vehicle and may be any other suitable kind of sensor. This is a very efficient way of obtaining the longitudinal, lateral and vertical coordinates representing respective dimensions of the part of the road.

The method may further comprise estimating the condition of the road based on the estimated respective vertical positions.

The method may also comprise calculating a mean of the vertical coordinates of the first plurality of data points for each segmented data area based on vertical coordinates of the first plurality of data points and the condition of the road may be estimated based on the calculated means.

Segmenting the first plurality of data points into a plurality of segmented data areas may comprise dividing a representation of the part of the road into the plurality of segmented data areas and assigning each of the first plurality of data points to a segmented data area based on the longitudinal and lateral coordinates of the first plurality of data points.

The sensor may comprise one or more Light Detection and Ranging, LIDAR, sensors.

The motion state of the vehicle may be estimated based on sensor data received from one or more motion tracking sensor and/or rotation wheel speed sensors of the vehicle.

The sensor data may be received from an inertial measurement unit, IMU, and/or from a wheel speed sensor, WSS.

The motion state of the vehicle may comprise at least one of a longitudinal velocity, a lateral velocity, a roll angle, a pitch angle and a yaw angle of the vehicle.

The condition of the road may comprise at least one of a curvature of the road, an inclination of the road, a banking of the road, an anomaly of the road, and a smoothness of the road, wherein the anomaly of the road may comprise at least one of a road bump, an undulation, a pothole and a manhole cover.

The method may further comprise adjusting a regenerative braking force of the vehicle based on the estimated condition.

The method may also comprise adjusting a steering, a suspension and/or a speed of the vehicle based on the estimated condition.

The method may further comprise adjusting a speed profile based on the estimated condition.

The method may also comprise obtaining second data indicative of a steering angle to estimate segmented data areas among the plurality of segmented data areas where the vehicle might travel and wherein estimating the condition of the road is further based on the estimated segmented areas.

The disclosure also relates to a vehicle system comprising a memory and a controller configured to perform the method, and to a vehicle comprising said vehicle system.

Lidar sensors transmit light pulses at certain known angles and receive the returned light after reflection, thereby being able to calculate the distance to objects in the real world. A cloud of points or point cloud in the form of three-dimensional (3D) coordinates (longitudinal, lateral and vertical coordinates representing respective dimensions of the real world) measurements can be calculated from the transmitted and received light pulses. The longitudinal, lateral and vertical coordinates can be accurate up to a centimetre, which along with the Inertial Measurement Unit, IMU and wheel speed sensors assist for detecting the condition of the road relative to the vehicle both in current and future time instants.

The disclosure relates to the estimation of road conditions such as geometrical profile of the road along longitudinal (road inclination) and lateral (road banking) direction of vehicle motion, as well as road anomaly detection (like road bumps, waviness, potholes, manhole covers). This allows to improve driving safety, ride comfort, vehicle stability and electric vehicle energy efficiency through accurate LiDAR-based estimation of road anomaly and road geometrical profile.

Detection of road anomaly might be used to increase ride comfort by adjusting the suspension, e.g. spring and dampers, actively. Air drag in electric vehicles can be reduced by keeping the vehicle close to ground on high-speed flat roads with no anomalies.

Detection of decreasing road gradient or descending inclination ahead in the horizon might be used to recover electric energy in an optimal way while driving at medium to high speeds.

For instance, the regenerative braking force magnitude can be adjusted based on the road slopes ahead. If the road slope will be uphill, the regenerative braking force magnitude can be reduced before the vehicle starts going uphill. If the road slope is downhill, the regenerative braking force magnitude can be increased before the vehicle starts going downhill. Good knowledge of road inclination ahead can be used to plan the vehicle speed profile in the most energy efficient way. Road gradient (either decreasing or increasing) estimated in front of the vehicle can be used in electrical energy consumption calculations either directly in real time algorithms running onboard the computer in the car or indirectly by sending these altitude variations of the road to a map in cloud computer. Similarly, estimation of the road banking earlier in the driving direction horizon could be used in predictive roll stability control.

This disclosure has the advantage of being computationally efficient and perceive road feature in accuracy to the order of 1 centimetre. These advantages are achieved by employing traditional geometrical logic and non- linear filtering techniques.

**Brief Description of Drawings**

Figure 1 illustrates a block diagram of a vehicle system according to the disclosure.

Figure 2 illustrates a flowchart schematically depicting a method for enabling estimation of a condition of a road according to the disclosure.

Figures 3A and 3B illustrate schematically a vehicle and how to estimate a road inclination according to an embodiment of the disclosure.

Figure 4 illustrates schematically a vehicle and how to estimate a road banking according to an embodiment of the disclosure.

Figures 5A and 5B illustrate schematically a vehicle and how to estimate a pothole or a road bump according to an embodiment of the disclosure.

Figure 6 illustrates schematically an initialization of the segmented data areas representing a road according to an embodiment of the disclosure.

Figures 7, 8 and 9 illustrate schematically the segmented data areas with current and previous detected data.

## Description of Embodiments

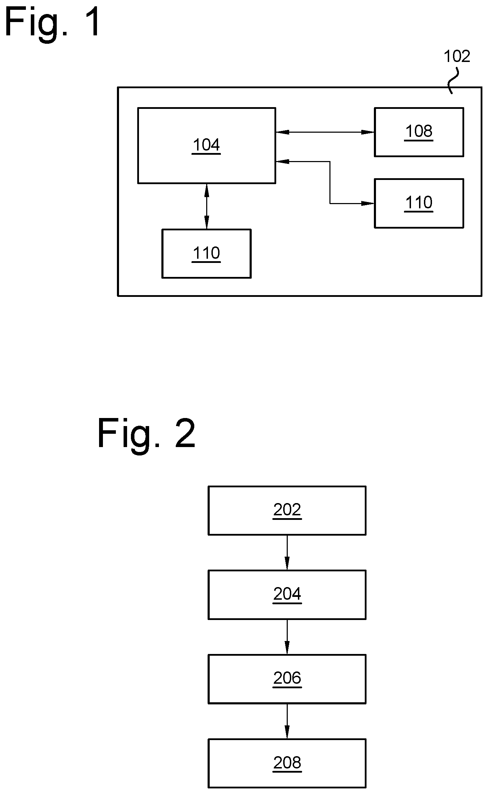

Figure 1 illustrates a block diagram of a vehicle system 102 according to the disclosure. The vehicle system 102 may comprise a processing unit 104, a memory 106, a sensor unit 108, and a communication unit 110. The processing unit 104 is connected to the memory 106, the sensor unit 108, and the communication unit 110. The communication unit 110 may transmit and receive information via Bluetooth, through a wireless communication network, for example, a 4G network, and/or using any other suitable communication technology. The sensor unit 108 may comprise sensors such as Lidar, IMU (accelerometer & gyroscope), wheel speed sensors, steering wheel sensor, etc.

Figure 2 illustrates a flowchart schematically depicting a method a method for enabling estimation of a condition of a road according to the disclosure. The method of Figure 2 may be performed by the vehicle system 102 of Figure 1.

In step 202 of the method, the vehicle system obtains, from a sensor mounted on a vehicle, first data comprising a first plurality of data points. Each of the first plurality of data points comprises longitudinal, lateral and vertical coordinates representing respective dimensions of a part of the road at a first time. The sensor may be a three-dimensional (3D) sensor. For instance, the 3D sensor may be a lidar sensor which is part of the sensor unit 108. The lidar sensor may scan the road extending in front of the vehicle and generate the first plurality of data points.

In step 204 of the method, the vehicle system obtains a second plurality of data points, wherein each of the second plurality of data points comprises longitudinal, lateral and vertical coordinates representing respective dimensions of the part of the road at a second time, and wherein the first time is more recent than the second time. The second plurality of data points may be stored in a memory or in a data base that the vehicle system can access.

In step 206, the first plurality of data points is segmented into a plurality of segmented data areas or grids based on the longitudinal and lateral coordinates of the first plurality of data points.

In step 208, a respective vertical position is estimated in each segmented data area based on the vertical coordinates of the second plurality of data points and a motion state of the vehicle at the second time. The motion state of the vehicle may be estimated based on sensor data received from one or more motion tracking sensor and/or rotation wheel speed sensors of the vehicle. The sensor data may be received from the IMU, and/or from the WSS of the sensor unit 108. The motion state of the vehicle may comprise at least one of a longitudinal velocity, a lateral velocity, a roll angle, a pitch angle and a yaw angle of the vehicle.

The method of Figure 2 may further comprise, after step 208, another step of estimating the condition of the road based on the estimated respective vertical positions.

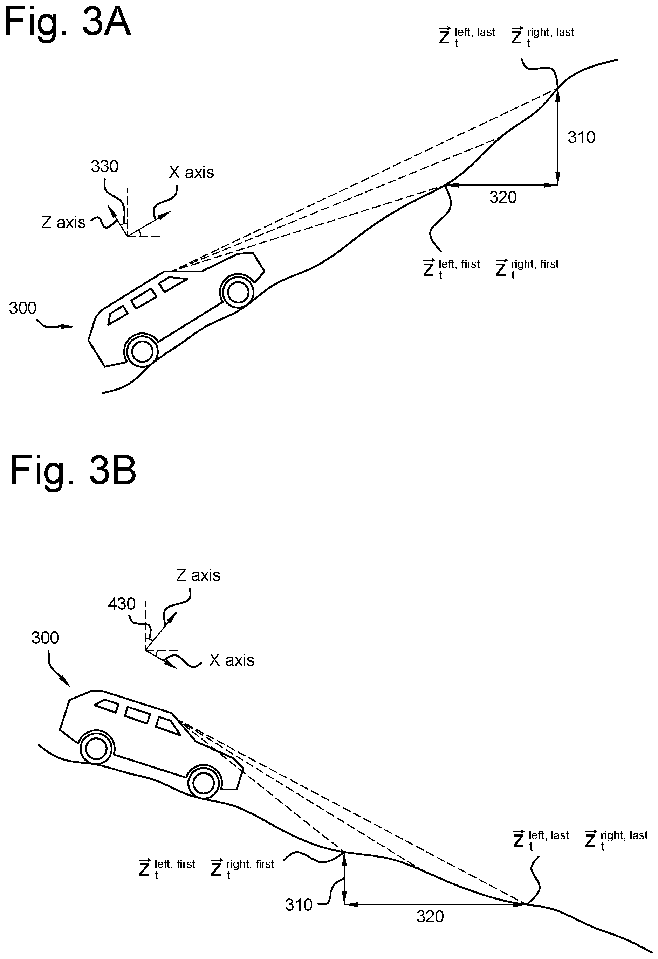

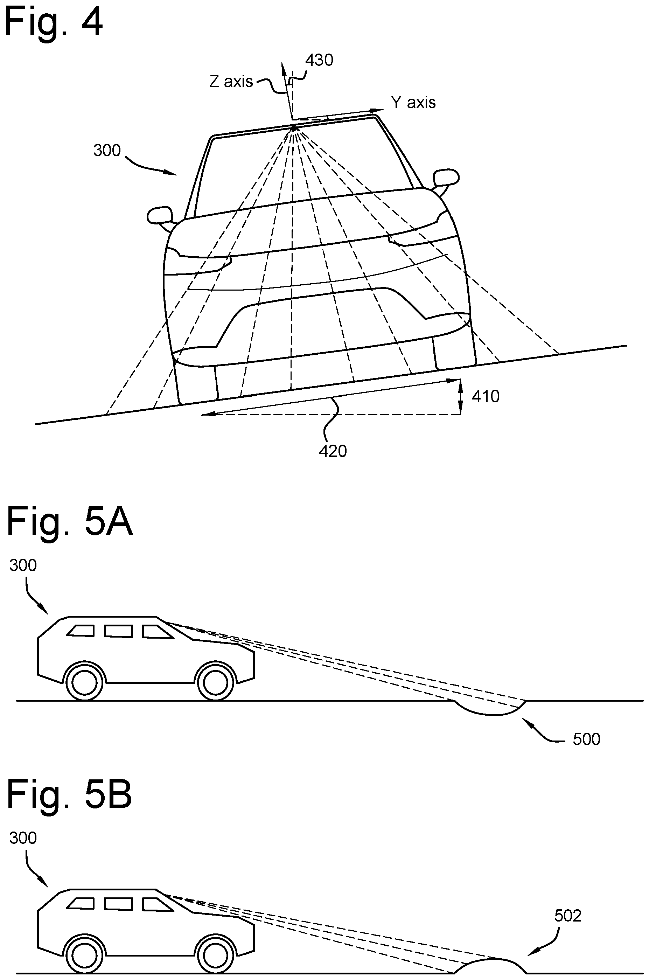

The condition of the road may comprise at least one of a curvature of the road, an inclination of the road as shown in Figures 3A and 3B, a banking of the road as shown in Figure 4, an anomaly of the road, and a smoothness of the road, wherein the anomaly of the road may comprise at least one of a road bump 502 as shown in Figure 5B, an undulation, a pothole 500 as shown in Figure 5A and a manhole cover. The smoothness of the road, also called pavement smoothness or roughness of the road, is a measure of minute elevation changes in the pavement surface that indicates the drivers' comfort. It may be estimated using a pavement profile (a measure of minute elevation changes in the pavement surface). Pavement profiles can be visualized as imaginary lines "drawn" along the surfaces of the pavement. Normally, pavement profiles are measured either longitudinally (down the road) or transversely (across the road).

In an alternative embodiment, the method of Figure 2 may comprise calculating a mean of the vertical coordinates of the first plurality of data points for each segmented data area based on vertical coordinates of the first plurality of data points after step 206. In this alternative embodiment, step 208 may comprise estimating the condition of the road based also on the calculated means.

The method of Figure 2 may further comprise adjusting a regenerative braking force of the vehicle based on the estimated condition, and/or adjusting a steering, a suspension and/or a speed of the vehicle based on the estimated condition, and/or adjusting a speed profile based on the estimated condition.

Furthermore, the method may also comprise obtaining second data indicative of a steering angle to estimate segmented data areas among the plurality of segmented data areas where the vehicle might travel and wherein estimating the condition of the road is further based on the estimated segmented areas.

The step 206 of Figure 2 may comprise dividing a representation of the part of the road into the plurality of segmented data areas and assigning each of the first plurality of data points to a segmented data area based on the longitudinal and lateral coordinates of the first plurality of data points.

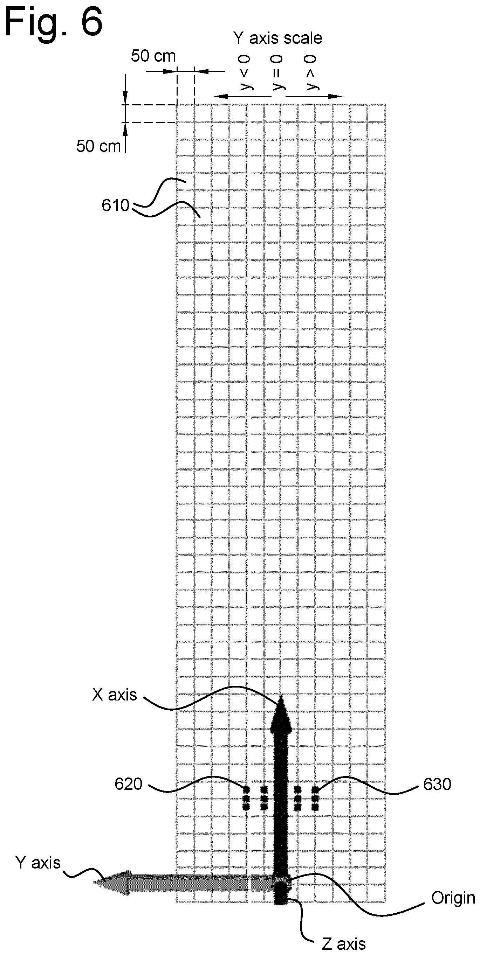

Figure 6 shows how a representation of a part of the road in front of the vehicle can be divided into the plurality of segmented data areas 610. The terms grids, virtual grids and segmented data areas will be used through the description to indicate the same. Figure 6 shows the representation of a part of the road that has been divided into a plurality of 50-centimetre x 50-centimetre grids 610. This is just a non-limiting example and the representation of the road may be divided into the plurality of segmented data areas in any other way. The array of grids shown in Figure 6 is represented using a system of reference having as origin the vehicle 300 as shown in Figures 3A-3B, 4, and 5A-5B wherein the x axis, y axis and z axis respectively represent in Figures 3A, 3B, 4 and 6 a longitudinal direction, a lateral direction, and a vertical direction. The longitudinal, lateral and vertical coordinates of the data points represent respective dimensions of the road in the x, y and z axis. As Figure 6 shows a top view, the z axis is perpendicular to the array of grids. Figure 6 also shows the front right tire position 630 and the front left tire position 620 of the vehicle 300.

The vertical coordinate can be used to determine whether a data point received from the lidar at a time t belongs to the road surface and not to a static or a dynamic object around or over the road surface. The data points with lowest values in the vertical coordinate below a certain threshold have the highest probability of belonging to the road and will form the first plurality of data points. The longitudinal and lateral coordinates of the first plurality of data points can be used then to assign each of the first plurality of data points to one of the grids 610 of Figure 6.

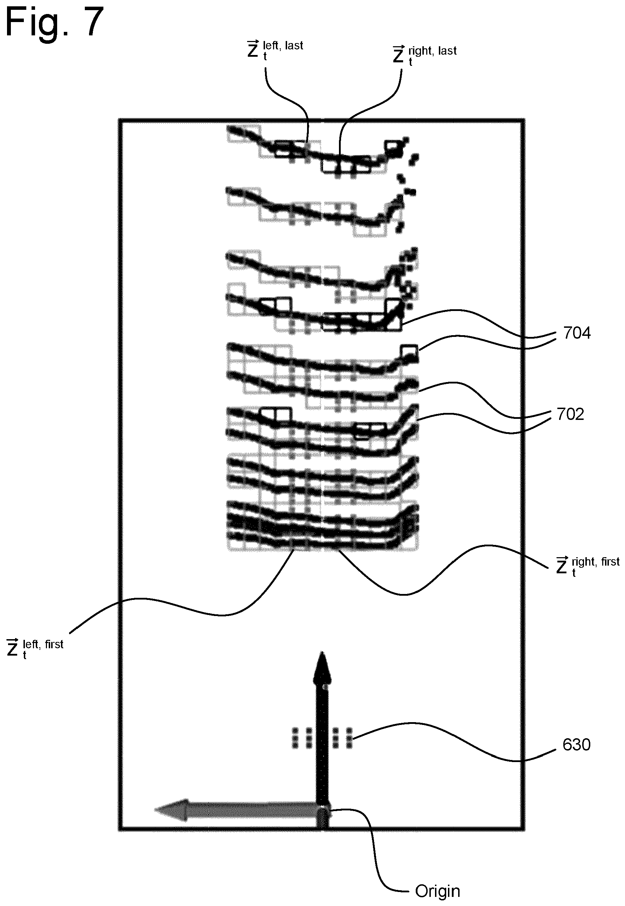

A second plurality of data points is obtained, wherein the second plurality of points comprise longitudinal, lateral and vertical coordinates representing respective dimensions of the part of the road at a second time t-1, wherein the first time is more recent than the second time. The grids comprising data points that belong to the first time t and to the second tie t-1 are indicated as 702 in Figures 7, 8 and 9, and the grids that comprise data points that belong to the first plurality of data points but do not comprise data points that belong to the second plurality of data points are indicated as 704 in Figures 7, 8 and 9.

As said, the motion states of the vehicle (such as longitudinal velocity, lateral velocity, roll angle 430, pitch angle 330, yaw angle) for previous second time t-1 (in previous 100 milliseconds lidar measurement time stamp), are calculated by processing IMU and Wheel Speed Sensor (WSS) data. In this way, a mean $Z_{t-1}$ of the vertical coordinates of the second plurality of points in each grid 610 can be used to calculate an estimated vertical position by propagating each $Z_{t-1}$ to current time instant t with the transformation model as indicated below in Equation 1:

$$\hat{Z}_t = (0.1 \times \begin{Bmatrix} v_{t-1}^x \\ v_{t-1}^y \\ v_{t-1}^z \end{Bmatrix}) \times \overrightarrow{Z}_{t-1} \qquad \text{Equation 1}$$

In Equation 1, the term 0.1 is a constant, $v_{t-1}^x$, $v_{t-1}^y$, $v_{t-1}^z$ represent the following motion states of the vehicle: vehicle's longitudinal velocity along x axis, lateral velocity along y axis and vertical velocity along z axis respectively. The velocities $v_{t-1}^x, v_{t-1}^y, v_{t-1}^z$ may be obtained by fusion of IMU and WSS sensor data.

In this way, $\hat{Z}_t$ in each grid 610 represents the estimation of the respective vertical position in the corresponding grid or segmented data area based on the vertical coordinates of the second plurality of data points and the motion state of the vehicle at the second time t-1.

The estimated respective vertical positions can be used to estimate the condition of the road.

A measured value $Z_t$ or mean of the vertical coordinates of the first plurality of data points for each segmented data area can be calculated based on vertical coordinates of the first plurality of data points. The mean $Z_t$ of the vertical coordinates of the first plurality of data points for each segmented data area 610 is obtained by calculating the mean of all the data points in said segmented data area 610 that belong to the first plurality of data points.

Then the grid's estimated respective vertical position or mean $\hat{Z}_t$ can be combined or fused with $Z_t$. This combination or fusion will give a grid's mean height $\overline{Z}_t$. Equation 2 shows the simplest possible fusion or combination of $\hat{Z}_t$ and $Z_t$ by averaging them as below:

$$\overrightarrow{Z_t} = \frac{1}{2}(\hat{Z}_t + Z_t) \qquad \text{Equation 2}$$

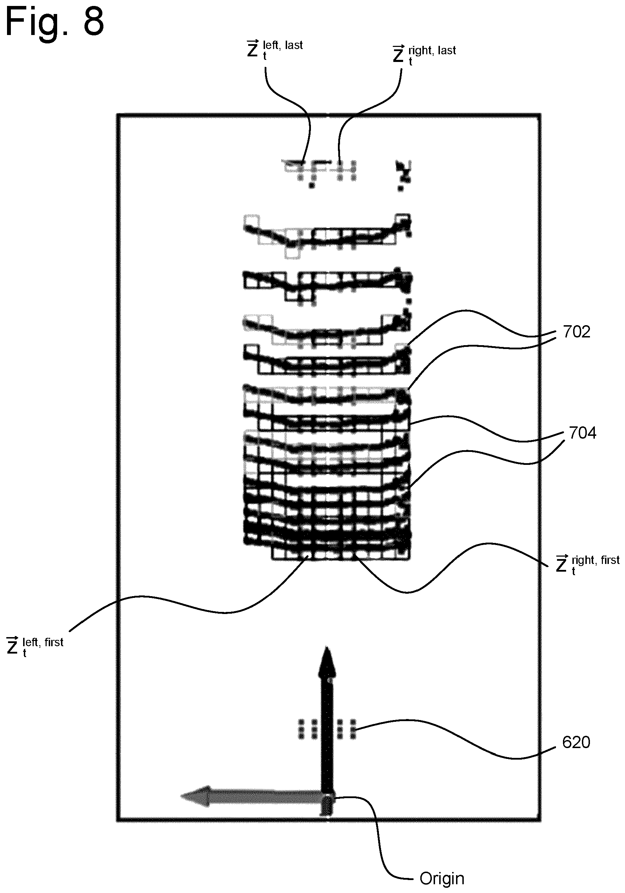

A steering wheel sensor may provide second data indicative of a steering angle to estimate segmented data areas among the plurality of segmented data areas where the vehicle might travel and wherein estimating the condition of the road is further based on the estimated segmented areas. In Figures 7 and 8, $\overrightarrow{Z}_t^{left,first}$ and $\overrightarrow{Z}_t^{right,first}$ indicate the estimated grids where the vehicle might travel closest to the vehicle and $\overrightarrow{Z}_t^{right,last}$ $\overrightarrow{Z}_t^{left,last}$ indicate the estimated grids where the vehicle might travel farthest to the vehicle on the left and right sides respectively.

A predicted height of the road $h_{road\,ahead}$ or estimated inclination of the road can be obtained from $\overline{Z}_t$ observation extending along the X axis using below Equations 3-5 and as shown in Figures 4A and 4B:

$$\Delta h_{observed\ grids} = \frac{1}{2} \left\{ \left( \vec{Z}_t^{\,right,last} - \vec{Z}_t^{\,right,last-1} - \cdots \vec{Z}_t^{\,right,first+1} - \vec{Z}_t^{\,right,first} \right) \right.$$
$$\left. + \left( \vec{Z}_t^{\,left,last} - \vec{Z}_t^{\,left,last-1} - \cdots \vec{Z}_t^{\,left,first+1} - \vec{Z}_t^{\,left,first} \right) \right\}$$

<div align="center">Equation 3</div>

$$\Delta h_{vehicle} = cos\,(\theta_{vehicle}) \times \Delta d_{observed\ grids} \qquad \text{Equation 4}$$

$$h_{road\ ahead} = \Delta h_{observed\ grids} + \Delta h_{vehicle} \qquad \text{Equation 5}$$

where, $h_{road\ ahead}$ is the estimated inclination of the road, $\Delta h_{observed\ grids}$ 310 is a height difference component as shown in Figures 3A-3B and is based only on lidar measurements, $\Delta h_{vehicle}$ is a compensation due to current pitch angle 330 ($\theta_{vehicle}$) of the vehicle as shown in Figures 3A-3B and is obtained by integration of IMU gyroscope pitch rate, and $\Delta d_{observed\ grids}$ 320 is the length of extension of the grids from last until first as indicated in Figure 5.

The lateral inclination $b_{road\ ahead}$, also called forward road bank measurement or height difference in lateral direction of the vehicle, is calculated in a similar way using Equations 6-8 wherein the different parameters of Equations 6-8 are shown in Figure 4:

$$\Delta b_{observed\ grids} = \frac{1}{last - first} \left\{ \left( \vec{Z}_t^{\,left,last} - \vec{Z}_t^{\,right,last} \right) + \left( \vec{Z}_t^{\,left,last-1} - \vec{Z}_t^{\,right,last-1} \right) + \cdots \right.$$
$$\left. + \left( \vec{Z}_t^{\,left,first+1} - \vec{Z}_t^{\,right,first+1} \right) + \left( \vec{Z}_t^{\,left,first} - \vec{Z}_t^{\,right,first} \right) \right)$$

<div align="center">Equation 6</div>

$$\Delta b_{vehicle} = sin\,(\phi_{vehicle}) \times front\ wheel\ base \qquad \text{Equation 7}$$

$$b_{road\ ahead} = \Delta b_{observed\ grids} + \Delta b_{vehicle} \qquad \text{Equation 8}$$

where, $b_{road\ ahead}$ is the lateral inclination, $\Delta b_{observed\ grids}$ is a bank difference component based only on lidar measurements, $\Delta b_{vehicve}$ 410 is a compensation due to the current roll angle ($\phi_{vehicle}$) 430 of the vehicle obtained by integration of IMU gyroscope pitch rate, and front wheel base 420 is the distance between the centre of the front tires.

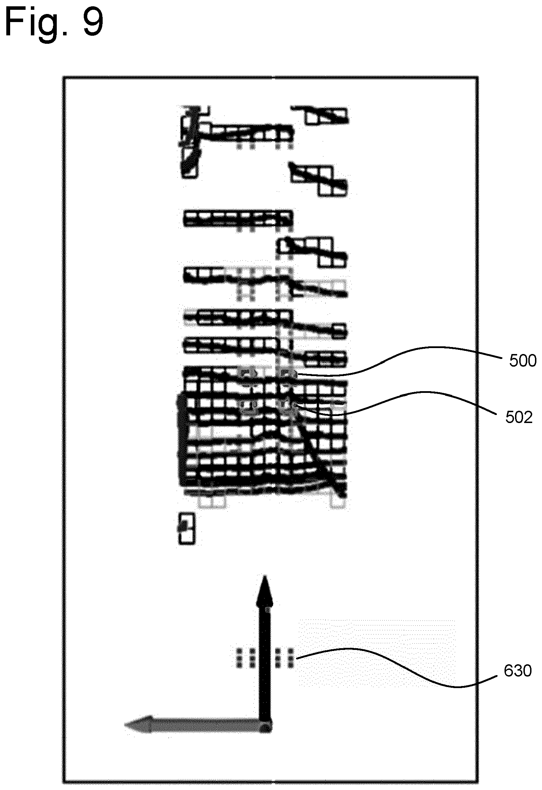

If a grid's mean $\vec{Z}_t$ and variance values are observed to be deviating beyond certain threshold to their adjacent grids, this indicates road anomalies, either a bump 502 or a pothole 500, along the driving direction, as in Figures 5A, 5B and 9.

Those skilled in the art will appreciate that the methods, systems and components described herein may comprise, in whole or in part, a combination of analogue and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

**Claims**

1. A method performed by a vehicle system for enabling estimation of a condition of a road, the method comprising:

   Obtaining (202), from a sensor mounted on a vehicle, first data comprising a first plurality of data points, wherein each of the first plurality of data points comprises longitudinal, lateral and vertical coordinates representing respective dimensions of a part of the road at a first time;
   Obtaining (204) a second plurality of data points, wherein each of the second plurality of data points comprises longitudinal, lateral and vertical coordinates representing respective dimensions of the part of the road at a second time, wherein the first time is more recent than the second time;
   Segmenting (206) the first plurality of data points into a plurality of segmented data areas based on the longitudinal and lateral coordinates of the first plurality of data points by dividing a representation of the part of the road into the plurality of segmented data areas and
   assigning each of the first plurality of data points to a segmented data area based on the longitudinal and lateral coordinates of the first plurality of data points; and
   estimating (208) a respective vertical position in each segmented data area based on the vertical coordinates of the second plurality of data points and a motion state of the vehicle at the second time, wherein the motion state of the vehicle comprises at least one of a longitudinal velocity, a lateral velocity, a vertical velocity, a roll angle, a pitch angle and a yaw angle of the vehicle.

2. The method according to claim 1, further comprising estimating the condition of the road based on the estimated respective vertical positions.

3. The method according to claim 2, further comprising calculating a mean of the vertical coordinates of the first plurality of data points for each segmented data area based on vertical coordinates of the first plurality of data points and wherein the condition of the road is estimated based on the calculated means.

4. The method according to any of the previous claims, wherein the sensor comprises one or more Light Detection and Ranging, LIDAR, sensors.

5. The method according to any of the previous claims, wherein the motion state of the vehicle is estimated based on sensor data received from one or more motion tracking sensor and/or rotation wheel speed sensors of the vehicle.

6. The method according to claim 1, wherein the sensor data is received from an inertial measurement unit, IMU, and/or from a wheel speed sensor, WSS.

7. The method according to claim 2 or any previous claim dependent on claim 2, wherein the condition of the road comprises at least one of a curvature of the road, an inclination of the road, a banking of the road, an anomaly of the road, and a smoothness of the road, wherein the anomaly of the road comprises at least one of a road bump, an undulation, a pothole and a manhole cover.

8. The method according to claim 2 or any previous claim dependent on claim 2, further comprising adjusting a regenerative braking force of the vehicle based on the estimated condition.

9. The method according to claim 2 or any previous claim dependent on claim 2, further comprising adjusting a steering, a suspension and/or a speed of the vehicle based on the estimated condition.

10. The method according to claim 2 or any previous claim dependent on claim 2, further comprising adjusting a speed profile based on the estimated condition.

11. The method according to claim 2 or any previous claim dependent on claim 2, further comprising obtaining second data indicative of a steering angle to estimate segmented data areas among the plurality of segmented data areas where the vehicle might travel and wherein estimating the condition of the road is further based on the estimated segmented areas.

**12.** A vehicle system comprising a memory and a controller configured to perform the method according to any of the previous claims.

**13.** A vehicle comprising the vehicle system according to claim 12.

## Patentansprüche

**1.** Verfahren, durchgeführt durch ein Fahrzeugsystem, zum Ermöglichen einer Schätzung eines Zustands einer Straße, wobei das Verfahren Folgendes umfasst:

Erhalten (202), von einem an einem Fahrzeug montierten Sensor, erster Daten, die eine erste Vielzahl von Datenpunkten umfassen, wobei jeder der ersten Vielzahl von Datenpunkten Longitudinal-, Lateral- und Vertikalkoordinaten umfasst, die jeweilige Dimensionen eines Teils der Straße zu einem ersten Zeitpunkt repräsentieren;

Erhalten (204) einer zweiten Vielzahl von Datenpunkten, wobei jeder der zweiten Vielzahl von Datenpunkten Longitudinal-, Lateral- und Vertikalkoordinaten umfasst, die jeweilige Dimensionen des Teils der Straße zu einem zweiten Zeitpunkt repräsentieren, wobei der erste Zeitpunkt jünger als der zweite Zeitpunkt ist;

Segmentieren (206) der ersten Vielzahl von Datenpunkten in eine Vielzahl von segmentierten Datenbereichen basierend auf den Longitudinal- und Lateralkoordinaten der ersten Vielzahl von Datenpunkten durch Unterteilen einer Darstellung des Teils der Straße in die Vielzahl von segmentierten Datenbereichen und Zuweisen jedes der ersten Vielzahl von Datenpunkten zu einem segmentierten Datenbereich basierend auf den Longitudinal- und Lateralkoordinaten der ersten Vielzahl von Datenpunkten; und

Schätzen (208) einer jeweiligen vertikalen Position in jedem segmentierten Datenbereich basierend auf den Vertikalkoordinaten der zweiten Vielzahl von Datenpunkten und einem Bewegungszustand des Fahrzeugs zu dem zweiten Zeitpunkt, wobei der Bewegungszustand des Fahrzeugs eine Longitudinalgeschwindigkeit und/oder eine Lateralgeschwindigkeit und/oder eine Vertikalgeschwindigkeit und/oder einen Rollwinkel und/oder einen Nickwinkel und/oder einen Gierwinkel des Fahrzeugs umfasst.

**2.** Verfahren nach Anspruch 1, ferner umfassend Schätzen des Zustands der Straße basierend auf den geschätzten jeweiligen vertikalen Positionen.

**3.** Verfahren nach Anspruch 2, ferner umfassend Berechnen eines Mittelwerts der Vertikalkoordinaten der ersten Vielzahl von Datenpunkten für jeden segmentierten Datenbereich basierend auf Vertikalkoordinaten der ersten Vielzahl von Datenpunkten und wobei der Zustand der Straße basierend auf dem berechneten Mittelwert geschätzt wird.

**4.** Verfahren nach einem der vorhergehenden Ansprüche, wobei der Sensor einen oder mehrere Light-Detection-and-Ranging- bzw. LIDAR-Sensoren umfasst.

**5.** Verfahren nach einem der vorhergehenden Ansprüche, wobei der Bewegungszustand des Fahrzeugs basierend auf Sensordaten geschätzt wird, die von einem oder mehreren Bewegungsverfolgungssensoren und/oder Raddrehzahlsensoren des Fahrzeugs empfangen werden.

**6.** Verfahren nach Anspruch 1, wobei die Sensordaten von einer inertialen Messeinheit, IMU, und/oder von einem Raddrehzahlsensor, WSS, empfangen werden.

**7.** Verfahren nach Anspruch 2 oder einem von Anspruch 2 abhängigen vorhergehenden Anspruch, wobei der Zustand der Straße eine Krümmung der Straße und/oder eine Längsneigung der Straße und/oder eine Querneigung der Straße und/oder eine Anomalie der Straße und/oder eine Ebenheit der Straße umfasst, wobei die Anomalie der Straße eine Bremsschwelle und/oder eine Unebenheit und/oder ein Schlagloch und/oder einen Kanaldeckel umfasst.

**8.** Verfahren nach Anspruch 2 oder einem von Anspruch 2 abhängigen vorhergehenden Anspruch, ferner umfassend Anpassen einer Nutzbremskraft des Fahrzeugs basierend auf dem geschätzten Zustand.

**9.** Verfahren nach Anspruch 2 oder einem von Anspruch 2 abhängigen vorhergehenden Anspruch, ferner umfassend Anpassen einer Lenkung, einer Aufhängung und/oder einer Geschwindigkeit des Fahrzeugs basierend auf dem geschätzten Zustand.

10. Verfahren nach Anspruch 2 oder einem von Anspruch 2 abhängigen vorhergehenden Anspruch, ferner umfassend Anpassen eines Geschwindigkeitsprofils basierend auf dem geschätzten Zustand.

11. Verfahren nach Anspruch 2 oder einem von Anspruch 2 abhängigen vorhergehenden Anspruch, ferner umfassend Erhalten zweiter Daten, die einen Lenkwinkel angeben, um segmentierte Datenbereiche unter der Vielzahl von segmentierten Datenbereichen zu schätzen, in denen das Fahrzeug fahren könnte, und wobei das Schätzen des Zustands der Straße ferner auf den geschätzten segmentierten Bereichen basiert.

12. Fahrzeugsystem, das einen Speicher und eine Steuerung umfasst, ausgelegt zum Durchführen des Verfahrens nach einem der vorhergehenden Ansprüche.

13. Fahrzeug, das das Fahrzeugsystem nach Anspruch 12 umfasst.

**Revendications**

1. Procédé mis en œuvre par un système de véhicule pour permettre une estimation d'un état d'une route, le procédé comprenant :

   l'obtention (202), en provenance d'un capteur monté sur un véhicule, de premières données comprenant une première pluralité de points de données, dans lequel chacun de la première pluralité de points de données comprend des coordonnées longitudinales, latérales et verticales représentant des dimensions respectives d'une partie de la route à un premier instant ;
   l'obtention (204) d'une seconde pluralité de points de données, dans lequel chacun de la seconde pluralité de points de données comprend des coordonnées longitudinales, latérales et verticales représentant des dimensions respectives de la partie de la route à un second instant, dans lequel le premier instant est plus récent que le second instant ;
   la segmentation (206) de la première pluralité de points de données en une pluralité de zones de données segmentées sur la base des coordonnées longitudinales et
   latérales de la première pluralité de points de données en divisant une représentation de la partie de la route en la pluralité de zones de données segmentées et en affectant chacun de la première pluralité de points de données à une zone de données segmentée sur la base des coordonnées longitudinales et latérales de la première pluralité de points de données ; et
   l'estimation (208) d'une position verticale respective dans chaque zone de données segmentée sur la base des coordonnées verticales de la seconde pluralité de points de données et d'un état de mouvement du véhicule au second instant, dans lequel l'état de mouvement du véhicule comprend au moins l'un d'une vitesse longitudinale, d'une vitesse latérale, d'une vitesse verticale, d'un angle de roulis, d'un angle de tangage et d'un angle de lacet du véhicule.

2. Procédé selon la revendication 1, comprenant en outre l'estimation de l'état de la route sur la base des positions verticales respectives estimées.

3. Procédé selon la revendication 2, comprenant en outre le calcul d'une moyenne des coordonnées verticales de la première pluralité de points de données pour chaque zone de données segmentée sur la base de coordonnées verticales de la première pluralité de points de données et dans lequel l'état de la route est estimé sur la base de la moyenne calculée.

4. Procédé selon l'une quelconque des revendications précédentes, dans lequel le capteur comprend un ou plusieurs capteurs de détection et télémétrie par la lumière, LIDAR.

5. Procédé selon l'une quelconque des revendications précédentes, dans lequel l'état de mouvement du véhicule est estimé sur la base de données de capteur reçues en provenance d'un ou plusieurs capteurs de suivi de mouvement et/ou capteurs de vitesse de roue de rotation du véhicule.

6. Procédé selon la revendication 1, dans lequel les données de capteur sont reçues en provenance d'une unité de mesure inertielle, IMU, et/ou d'un capteur de vitesse de roue, WSS.

7. Procédé selon la revendication 2 ou l'une quelconque des revendications précédentes dépendant de la revendication 2, dans lequel l'état de la route comprend au moins l'un d'une courbure de la route, d'une inclinaison de la route, d'un dévers de la route, d'une anomalie de la route, et d'une rugosité de la route, dans lequel l'anomalie de la route comprend au moins l'un d'une bosse de la route, d'une ondulation, d'un nid-de-poule et d'une plaque d'égout.

8. Procédé selon la revendication 2 ou l'une quelconque des revendications précédentes dépendant de la revendication 2, comprenant en outre l'ajustement d'une force de freinage régénérative du véhicule sur la base de l'état estimé.

9. Procédé selon la revendication 2 ou l'une quelconque des revendications précédentes dépendant de la revendication 2, comprenant en outre l'ajustement d'une direction, d'une suspension et/ou d'une vitesse du véhicule sur la base de l'état estimé.

10. Procédé selon la revendication 2 ou l'une quelconque des revendications précédentes dépendant de la revendication 2, comprenant en outre l'ajustement d'un profil de vitesse sur la base de l'état estimé.

11. Procédé selon la revendication 2 ou l'une quelconque des revendications précédentes dépendant de la revendication 2, comprenant en outre l'obtention de secondes données indicatives d'un angle de braquage pour estimer des zones de données segmentées parmi la pluralité de zones de données segmentées où le véhicule peut se déplacer et dans lequel l'estimation de l'état de la route est en outre basée sur les zones segmentées estimées.

12. Système de véhicule comprenant une mémoire et un dispositif de commande configurés pour mettre en œuvre le procédé selon l'une quelconque des revendications précédentes.

13. Véhicule comprenant le système de véhicule selon la revendication 12.

# Fig. 1

# Fig. 2

# Fig. 3A

$\vec{z}_t^{\text{left, last}}$   $\vec{z}_t^{\text{right, last}}$

310

320

330

X axis

Z axis

$\vec{z}_t^{\text{left, first}}$   $\vec{z}_t^{\text{right, first}}$

300

# Fig. 3B

Z axis

430

X axis

300

$\vec{z}_t^{\text{left, last}}$   $\vec{z}_t^{\text{right, last}}$

$\vec{z}_t^{\text{left, first}}$   $\vec{z}_t^{\text{right, first}}$

310

320

# Fig. 4

# Fig. 5A

# Fig. 5B

# Fig. 6

# Fig. 7

$\vec{z}_t^{\text{left, last}}$

$\vec{z}_t^{\text{right, last}}$

704

702

$\vec{z}_t^{\text{right, first}}$

$\vec{z}_t^{\text{left, first}}$

630

Origin

# Fig. 8

$\vec{z}_t^{\text{left, last}}$

$\vec{z}_t^{\text{right, last}}$

702

704

$\vec{z}_t^{\text{right, first}}$

$\vec{z}_t^{\text{left, first}}$

620

Origin

# Fig. 9

**EP 4 564 315 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011060478 A1

- US 2022324421 A1